# EUROPEAN PATENT APPLICATION

(11) **EP 4 761 359 A1**
(43) Date of publication of application: **17.06.2026**
(21) Application number: 25221540.5
(22) Date of filing: 08.12.2025
(51) Int. Cl.: H04W 36/00

(54) **CELL MEASUREMENTS IN A MEDIUM ACCESS CONTROL CONTROL ELEMENT (MAC-CE)**

(30) Priority: 16.12.2024 US 202463734368 P
(71) Applicant: Nokia Technologies Oy, 02610 Espoo (FI)
(72) Inventor: KOSKELA, Timo, Oulu (FI); GOYAL, Sanjay, Denville (US); STANCZAK, Jedrzej, Wroclaw (PL)
(74) Representative: Nokia EPO representatives

(57) **Abstract**

Various example embodiments relate generally to including cell measurements in a medium access control-control element (MAC-CE). A method of a first apparatus may, for example, comprising: identifying, in response to a triggered reporting event: at least one candidate cell measurement of a first type that does not meet reporting criteria; and at least one cell measurement of a second type that is other than the first type. The method may further comprise determining to include or not include in a Medium Access Control-Control Element, MAC-CE, measurement report, MR, at least some of the at least one candidate cell measurement of the first type based on at least one rule, and encoding a MAC-CE MR according to the determination for transmission to a second apparatus.

## Description

### Technical Field

Various example embodiments relate generally to including cell measurements in a medium access control-control element (MAC-CE).

### Background

A user equipment (UE) may be configured to perform layer 1 (L1) cell measurements and report them to a network node. The UE may, for example, perform beam measurements for one or more cells, which cells may include a serving cell and one or more candidate cells. If one or more trigger conditions are met based on the beam measurements, the UE may transmit a measurement report (MR) including at least some cell measurements to the network node. For example, the network node may, based on the received MR, determine to switch the UE's serving cell to a different (target) cell of the candidate cells, which is then indicated to the UE in a cell switch command.

### Summary

According to some aspects, there is provided the subject matter of the independent claims. Some further aspects are defined in the dependent claims. The embodiments that do not fall under the scope of the claims are to be interpreted as examples useful for understanding the disclosure.

According to a first aspect of the invention, there is provided a first apparatus comprising at least one processor; and at least one memory storing instructions that, when executed by the at least one processor, cause the first apparatus to: identify, in response to a triggered reporting event: at least one candidate cell measurement of a first type that does not meet reporting criteria; and at least one cell measurement of a second type that is other than the first type; and determine to include or not include in a Medium Access Control-Control Element, MAC-CE, measurement report, MR, at least some of the at least one candidate cell measurement of the first type based on at least one rule; and encode a MAC-CE MR according to the determination for transmission to a second apparatus.

In some example embodiments, the at least one cell measurement of the second type comprises at least one of: at least one candidate cell measurement that meets the reporting criteria; or at least one serving cell measurement.

In some example embodiments, the determining further comprises determining to include in the MAC-CE MR at least some of the at least one cell measurement of the second type with priority over the at least one candidate cell measurement of the first type.

In some example embodiments, the determining further comprises determining to include at least some of the at least one cell measurement of the second type while not exceeding at least one of: an uplink grant for the MAC-CE MR; or a first threshold number of cell measurements that the MAC-CE MR supports.

In some example embodiments, the determining further comprises determining not to include the at least some of the at least one cell measurement of the first type if the uplink grant for the MAC-CE MR includes at least one of: data; another MAC-CE; or another MAC-CE, with lower or equal priority to the MAC-CE MR

In some example embodiments, the determining further comprises determining to subsequently include in the MAC-CE MR at least some of the at least one cell measurement of the first type while not exceeding: the uplink grant for the MAC-CE MR; the first threshold number of cell measurements that the MAC-CE MR supports; a second threshold number, *M,* of candidate cell measurements of the first type.

In some example embodiments, the determining further comprises determining to include at least some of the at least one cell measurement of the first type with priority over the at least one candidate cell measurement of the second type.

In some example embodiments, the determining further comprises determining to include in the MAC-CE MR at least some of the at least one cell measurement of the first type while not exceeding: an uplink grant for the MAC-CE MR; a first threshold number of cell measurements that the MAC-CE MR supports; a second threshold number, *M,* of candidate cell measurements of the first type.

In some example embodiments, the determining further comprises determining to subsequently include at least some of the at least one cell measurement of the second type while not exceeding at least one of: the uplink grant for the MAC-CE MR; or the first threshold number of cell measurements that the MAC-CE MR supports.

In some example embodiments, the second threshold number *M* is configured by the second, or another, apparatus.

In some example embodiments, the second threshold number *M* indicates at least one of number of cell measurements of the first type: per candidate cell; per plurality of candidate cells; per MAC-CE MR; or per measurement and/or reporting configuration associated with the triggered reporting event.

In some example embodiments, the at least one processor; and the at least one memory stores instructions that, when executed by the at least one processor, cause the first apparatus at least to: transmit, to the second apparatus, at least a first indication of the capability of the first apparatus to include at least some of the at least one candidate cell measurement of the first type in the MAC-CE MR.

In some example embodiments, the first indication further indicates at least one of: a minimum; or a maximum number candidate cell measurement(s) of the first type that the first apparatus is capable of reporting.

In some example embodiments, the at least one processor and the at least one memory stores instructions that, when executed by the at least one processor, cause the first apparatus at least to: transmit, to the second apparatus, at least a second indication for indicating whether at least some of the at least one candidate cell measurement of the first type is or are included in the LTM MAC-CE MR.

In some example embodiments, the second indication comprises setting a predetermined field of the MAC-CE MR to one of a first value for indicating that cell measurements of the second type are only included or a second value for indicating that at least some of the at least one candidate cell measurement of the first type are included. In some example embodiments, the predetermined field is comprised by a first octet of the MAC-CE MR. In some example embodiments, one octet of the MAC-CE MR further comprises an event identifier associated with the at least one reporting event.

In some example embodiments, the identifying the at least one candidate cell measurement of the first type comprises identifying at least one candidate cell measurement for which at least one of the following conditions apply: a time-to-trigger, TTT, period associated with the at least one candidate cell measurement is started but not yet expired; a reference signal receive power, RSRP, value associated with the at least one candidate cell measurement is within a first range of an RSRP value of a serving cell measurement; the RSRP value associated with the at least one candidate cell measurement is within a second range of the highest RSRP value associated with another candidate cell measurement; or the RSRP value associated with the at least one candidate cell measurement not fulfilling the reporting criteria.

In some example embodiments, the at least some of the at least one candidate cell measurement comprises at least one of: an RS measurement value and RS index for at least one RS associated with the candidate cell; or an RS measurement value for at least one RS associated with the candidate cell.

In some example embodiments, the determining comprises determining to include a plurality of RS measurement values of the at least one candidate cell measurement of the first type and in ascending order of RS measurement value.

In some example embodiments, the MAC-CE MR is a lower-layer triggered mobility, LTM, MAC-CE MR.

According to a second aspect of the invention, there is provided a method of a first apparatus, comprising: identifying, in response to a triggered reporting event: at least one candidate cell measurement of a first type that does not meet reporting criteria; and at least one cell measurement of a second type that is other than the first type; determining to include or not include in a Medium Access Control-Control Element, MAC-CE, measurement report, MR, at least some of the at least one candidate cell measurement of the first type based on at least one rule; and encoding a MAC-CE MR according to the determination for transmission to a second apparatus.

In some embodiments, the second aspect may comprise any feature described in relation to the first aspect.

According to a third aspect of the invention, there is provided a computer program product comprising program instructions which, when the program instructions are executed by a first apparatus, cause the first apparatus to carry out a method of: identifying, in response to a triggered reporting event: at least one candidate cell measurement of a first type that does not meet reporting criteria; and at least one cell measurement of a second type that is other than the first type; determining to include or not include in a Medium Access Control-Control Element, MAC-CE, measurement report, MR, at least some of the at least one candidate cell measurement of the first type based on at least one rule; and encoding a MAC-CE MR according to the determination for transmission to a second apparatus.

In some embodiments, the third aspect may comprise any feature described in relation to the first aspect.

According to a fourth aspect of the invention, there is provided a computer program product embodied on a non-transitory distribution medium readable by a computer and comprising program instructions which, when the program instructions are executed by a first apparatus, cause the first apparatus to: identify, in response to a triggered reporting event: at least one candidate cell measurement of a first type that does not meet reporting criteria; and at least one cell measurement of a second type that is other than the first type; and determine to include or not include in a Medium Access Control-Control Element, MAC-CE, measurement report, MR, at least some of the at least one candidate cell measurement of the first type based on at least one rule; and encode a MAC-CE MR according to the determination for transmission to a second apparatus.

In some embodiments, the fourth aspect may comprise any feature described in relation to the first aspect.

According to a fifth aspect of the invention, there is provided a first apparatus, comprising: means for identifying, in response to a triggered reporting event: at least one candidate cell measurement of a first type that does not meet reporting criteria; and at least one cell measurement of a second type that is other than the first type; means for determining to include or not include in a Medium Access Control-Control Element, MAC-CE, measurement report, MR, at least some of the at least one candidate cell measurement of the first type based on at least one rule; and means for encoding a MAC-CE MR according to the determination for transmission to a second apparatus.

In some embodiments, the fifth aspect may comprise any feature described in relation to the first aspect.

In some embodiments, the first apparatus is comprised by a user terminal.

According to a sixth aspect of the invention, there is provided a second apparatus comprising at least one processor; and at least one memory storing instructions that, when executed by the at least one processor, cause the second apparatus to: receive, from a first apparatus, and in response to a triggered reporting event, a Medium Access Control- Control Element, LTM MAC-CE, measurement report, MR, wherein the MAC-CE MR includes at least an indication of whether at least one candidate cell measurement of a first type that does not meet reporting criteria is included in the MAC-CE MR; and decode the Mac-CE MR based, at least in part, on the indication.

In some example embodiments, the at least one processor and the at least one memory stores instructions that, when executed by the at least one processor, cause the second apparatus to: provide, to the first apparatus, a configuration associated with the reporting event, wherein the configuration indicates at least whether to include or not include the at least one candidate cell measurement of the first type in the MAC-CE MR.

In some example embodiments, the provided configuration, or another provided configuration, causes the first apparatus to identify the at least one candidate cell measurement of the first type.

In some example embodiments, the provided configuration, or the another provided configuration, causes the first apparatus to identify at least one candidate cell measurement of the first type for which at least one of the following conditions apply: a time-to-trigger, TTT, period associated with the at least one candidate cell measurement is started but not yet expired; a reference signal receive power, RSRP, value associated with the at least one candidate cell measurement is within a first range of an RSRP value of a serving cell measurement; or the RSRP value associated with the at least one candidate cell measurement is within a second range of the highest RSRP value associated with another candidate cell measurement; or the RSRP value associated with the at least one candidate cell measurement not fulfilling the reporting criteria.

In some example embodiments, the provided configuration, or another provided configuration, includes at least one rule for being applied by the first apparatus for determining whether to include or not include the at least one candidate cell measurement of the first type in the MAC-CE MR.

In some example embodiments, the MAC-CE MR is a lower-layer triggered mobility, LTM, MAC-CE MR.

According to a seventh aspect of the invention, there is provided a method of a second apparatus, comprising: receiving, from a first apparatus, and in response to a triggered reporting event, a Medium Access Control-Control Element, LTM MAC-CE, measurement report, MR, wherein the MAC-CE MR includes at least an indication of whether at least one candidate cell measurement of a first type that does not meet reporting criteria is included in the MAC-CE MR; and decoding the MAC-CE MR based, at least in part, on the indication.

In some embodiments, the seventh aspect may comprise any feature described in relation to the sixth aspect.

According to an eighth aspect of the invention, there is provided a computer program product comprising program instructions which, when the program instructions are executed by a second apparatus, cause the second apparatus to carry out a method of: receiving, from a first apparatus, and in response to a triggered reporting event, a Medium Access Control-Control Element, LTM MAC-CE, measurement report, MR, wherein the MAC-CE MR includes at least an indication of whether at least one candidate cell measurement of a first type that does not meet reporting criteria is included in the MAC-CE MR; and decoding the MAC-CE MR based, at least in part, on the indication.

In some embodiments, the eighth aspect may comprise any feature described in relation to the sixth aspect.

According to a ninth aspect of the invention, there is provided a computer program product embodied on a non-transitory distribution medium readable by a computer and comprising program instructions which, when the program instructions are executed by a second apparatus, cause the second apparatus to: receive, from a first apparatus, and in response to a triggered reporting event, a Medium Access Control- Control Element, LTM MAC-CE, measurement report, MR, wherein the MAC-CE MR includes at least an indication of whether at least one candidate cell measurement of a first type that does not meet reporting criteria is included in the MAC-CE MR; and decode the Mac-CE MR based, at least in part, on the indication.

In some embodiments, the ninth aspect may comprise any feature described in relation to the sixth aspect.

According to a tenth aspect of the invention, there is provided a second apparatus, comprising: means for receiving, from a first apparatus, and in response to a triggered reporting event, a Medium Access Control-Control Element, LTM MAC-CE, measurement report, MR, wherein the MAC-CE MR includes at least an indication of whether at least one candidate cell measurement of a first type that does not meet reporting criteria is included in the MAC-CE MR; and means for decoding the MAC-CE MR based, at least in part, on the indication.

In some example embodiments, the tenth aspect may comprise any feature described in relation to the sixth aspect.

In some example embodiments, the second apparatus is comprised by a network device.

According to an eleventh aspect of the invention, there is provided a first apparatus comprising at least one processor; and at least one memory storing instructions that, when executed by the at least one processor, cause the first apparatus to: identify, in response to a triggered reporting event: at least one candidate cell measurement of a first type; and at least one cell measurement of a second type that is other than the first type; and determine to include or not include in a Medium Access Control-Control Element, MAC-CE, measurement report, MR, at least some of the at least one candidate cell measurement of the first type based on at least one rule; and encode a MAC-CE MR according to the determination for transmission to a second apparatus, wherein identifying the at least one candidate cell measurement of the first type comprises identifying at least one candidate cell measurement that does not meet reporting criteria and is associated with at least one of: an active TCI state; at least one Physical Downlink Control Channel, PDCCH, order for triggering a random access procedure; an early random access procedure; a timing advance, TA, estimation; a timing advance, TA, acquisition; or a measurement quality which meets at least one criteria.

In some example embodiments, at least one candidate cell measurement is associated with the active TCI state if a reference signal, RS, associated with the at least one candidate cell measurement corresponds to the active TCI state or is quasi co-located, QCL, with another RS corresponding to the active TCI state.

In some example embodiments, at least one candidate cell measurement is associated with the at least one PDCCH order for triggering the random access procedure if an RS associated with the at least one candidate cell measurement is indicated in the PDCCH order.

In some example embodiments, at least one candidate cell measurement is associated with the early random access procedure if an RS associated with the at least one candidate cell measurement was transmitted as part of the early random access procedure.

In some example embodiments, at least one candidate cell measurement is associated with the TA estimation if an RS associated with the at least one candidate cell measurement is used as part of the TA estimation.

In some example embodiments, at least candidate cell measurement is associated with a measurement quality which meets at least one criteria if an average measurement quality for an RS associated with the at least one candidate cell measurement, and calculated over a number of time instances of a time-to-trigger, TTT, period, comprises one of a predetermined number of highest measurement quality values.

In some example embodiments, at least candidate cell measurement is associated with a measurement quality which meets at least one criteria if a most-recent measurement quality for an RS associated with the at least one candidate cell measurement, and measured during the TTT period, has a highest value relative to other RSs.

In some example embodiments, at least one candidate cell measurement is associated with a measurement quality which meets at least one criteria is a layer 1 measurement provided to a higher layer or an L1 measurement additionally filtered by layer 1 or layer 2.

In some example embodiments, the eleventh aspect may comprise any feature described in relation to the sixth aspect.

According to a twelfth aspect of the invention, there is provided a method, comprising: identifying, in response to a triggered reporting event: at least one candidate cell measurement of a first type; and at least one cell measurement of a second type that is other than the first type; determining to include or not include in a Medium Access Control-Control Element, MAC-CE, measurement report, MR, at least some of the at least one candidate cell measurement of the first type based on at least one rule; and encoding a MAC-CE MR according to the determination for transmission to a second apparatus, wherein identifying the at least one candidate cell measurement of the first type comprises identifying at least one candidate cell measurement that does not meet reporting criteria and is associated with at least one of: an active TCI state; at least one Physical Downlink Control Channel, PDCCH, order for triggering a random access procedure; an early random access procedure; a timing advance, TA, estimation; a timing advance, TA, acquisition; or a measurement quality which meets at least one criteria.

In some embodiments, the twelfth aspect may comprise any feature described in relation to the eleventh aspect.

According to a thirteenth aspect of the invention, there is provided a computer program product comprising program instructions which, when the program instructions are executed by a second apparatus, cause the second apparatus to carry out a method of: identifying, in response to a triggered reporting event: at least one candidate cell measurement of a first type; and at least one cell measurement of a second type that is other than the first type; determining to include or not include in a Medium Access Control-Control Element, MAC-CE, measurement report, MR, at least some of the at least one candidate cell measurement of the first type based on at least one rule; and encoding a MAC-CE MR according to the determination for transmission to a second apparatus, wherein identifying the at least one candidate cell measurement of the first type comprises identifying at least one candidate cell measurement that does not meet reporting criteria and is associated with at least one of: an active TCI state; at least one Physical Downlink Control Channel, PDCCH, order for triggering a random access procedure; an early random access procedure; a timing advance, TA, estimation; a timing advance, TA, acquisition; or a measurement quality which meets at least one criteria.

In some embodiments, the thirteenth aspect may comprise any feature described in relation to the eleventh aspect.

According to a fourteenth aspect of the invention, there is provided a computer program product embodied on a non-transitory distribution medium readable by a computer and comprising program instructions which, when the program instructions are executed by a second apparatus, cause the second apparatus to: identify, in response to a triggered reporting event: at least one candidate cell measurement of a first type; and at least one cell measurement of a second type that is other than the first type; determine to include or not include in a Medium Access Control-Control Element, MAC-CE, measurement report, MR, at least some of the at least one candidate cell measurement of the first type based on at least one rule; and encode a MAC-CE MR according to the determination for transmission to a second apparatus, wherein identifying the at least one candidate cell measurement of the first type comprises identifying at least one candidate cell measurement that does not meet reporting criteria and is associated with at least one of: an active TCI state; at least one Physical Downlink Control Channel, PDCCH, order for triggering a random access procedure; an early random access procedure; a timing advance, TA, estimation; a timing advance, TA, acquisition; or a measurement quality which meets at least one criteria.

In some embodiments, the fourteenth aspect may comprise any feature described in relation to the eleventh aspect.

According to a fifteenth aspect of the invention, there is provided a second apparatus, comprising: means for identifying, in response to a triggered reporting event: at least one candidate cell measurement of a first type; and at least one cell measurement of a second type that is other than the first type; means for determining to include or not include in a Medium Access Control-Control Element, MAC-CE, measurement report, MR, at least some of the at least one candidate cell measurement of the first type based on at least one rule; and means for encoding a MAC-CE MR according to the determination for transmission to a second apparatus, wherein the means for identifying the at least one candidate cell measurement of the first type comprises means for identifying at least one candidate cell measurement that does not meet reporting criteria and is associated with at least one of: an active TCI state; at least one Physical Downlink Control Channel, PDCCH, order for triggering a random access procedure; an early random access procedure; a timing advance, TA, estimation; a timing advance, TA, acquisition; or a measurement quality which meets at least one criteria.

In some example embodiments, the fifteenth aspect may comprise any feature described in relation to the eleventh aspect.

### Drawings

In the following, example embodiments will be described in greater detail with reference to the embodiments and the accompanying drawings, in which:
Figure 1 illustrates an example communication network;
Figure 2 is a signalling diagram illustrating an example of LTM;
Figure 3 is a schematic diagram relating to LTM configurations, useful for understanding example embodiments;
Figure 4 is a schematic diagram also relating to LTM configurations, useful for understanding example embodiments;
Figure 5 is a flow diagram of operations according to some example embodiments;
Figures 6 to 8 are schematic diagrams of first to third MAC-CEs according to some example embodiments;
Figure 9 is a flow diagram of operations according to some example embodiments;
Figure 10 is a flow diagram of operations according to some example embodiments;
Figure 11 is a signalling diagram according to some example embodiments;
Figure 12 illustrates an example of an apparatus; and
Figure 13 illustrates a non-transitory medium.

### Detailed Description

Various example embodiments relate generally to including cell measurements in a Medium Access Control-Control Element (MAC-CE) measurement report (MR). Various example embodiments relate to determining whether to include or not include, i.e., refrain from including, at least one candidate cell measurement of a first type that does not meet reporting criteria.

A UE may be configured to perform layer 1 (L1) cell measurements and report them to a network node in an L1 measurement report. The UE may, for example, perform beam measurements for one or more cells, which may include a serving cell and one or more candidate cells that the UE may camp on. The beam measurements may measure at least one of synchronization signal blocks (SSBs) or channel state information-reference signals (CSI-RSs) although other measurements may be performed. If one or more trigger conditions are met, the UE may transmit an MR including at least some of said measurements to the network node. The network node may, based on the received MR, determine to switch the UE's serving cell to a different (target) cell of the candidate cells, by means of a cell switch command. Lower-layer triggered mobility (LTM) is one such cell switch process having certain advantages. An LTM cell switch command may be transmitted using a MAC-CE.

It may be possible to transmit MRs using MAC-CEs and example embodiments relate to which measurement(s) to include or not include in a MAC-CE, whether in the context of LTM or otherwise.

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a communication network, such as any of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, the term "network device" or "network node" refers to a node in a communication network via which user equipment may access the network and/or which is capable of controlling radio communication and managing radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite and a geosynchronous earth orbit (GEO) satellite, or an aircraft network device.

Moreover, in connection of split radio access network (RAN), the network device may refer to a centralised unit (CU) of a base station and/or a distributed unit (DU) of a base station. An interface between CU and DU may be referred to as an F1 interface in NR. In the split RAN architecture, node operations may be carried out, at least partly, in the central/centralized unit, CU, (e.g. server, host or node) operationally coupled to the DU, (e.g. a radio head/node). One CU may control one or more DUs, acting at least as transmit/receive (Tx/Rx) nodes. In some embodiments, the DUs may comprise e.g. a radio link control (RLC), medium access control (MAC) layer and a physical (PHY) layer, whereas the CU may comprise the layers above RLC layer, such as a packet data convergence protocol (PDCP) layer, a radio resource control (RRC) and an internet protocol (IP) layers. Other functional splits are possible too. In practice, any processing task may be performed in either the CU or the DU and the boundary where the responsibility is shifted between the CU and the DU may depend on the applied implementation.

The term "terminal device" refers to any end device that may be capable of wireless communication. By way of example, a terminal device may be referred to as a communication device, user equipment (UE), user device, a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

A term "resource", as used herein, may refer to radio resources in time domain, in frequency domain, in space domain, and/or in code domain. Some examples of resources include e.g. a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources.

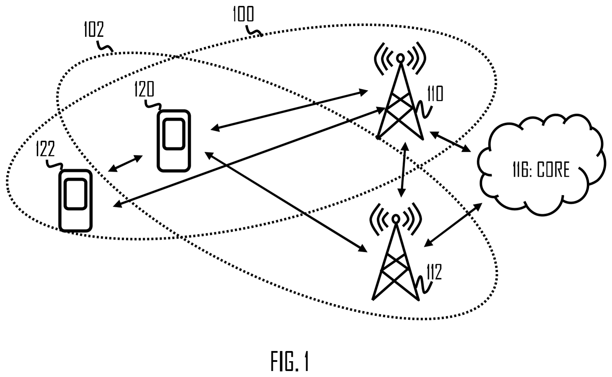

Figure 1 illustrates an example of a communication network to which examples disclosed herein may be applied. The communication network or a cellular communication network may comprise a network node 110 providing one or more cells, such as cell 100, and a network node 112 providing one or more other cells, such as cell 102. Each cell may be, e.g., a macro cell, a micro cell, femto, or a pico cell, for example. The cell may define a coverage area or a service area of the corresponding access node.

The network node 110 may provide a user equipment (UE) 120 (one or more UEs) with wireless access to the communication network. The wireless access may comprise downlink (DL) communication from the network node to the UE 120 and uplink (UL) communication from the UE 120 to the network node. Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for transmitting data towards the user equipment.

There may be a plurality of UEs 120, 122 in the system. Each of them may be served by the same or by different network nodes 110, 112. UE may be configured with dual connectivity (DC), wherein the UE, e.g. UE 120, may be connected to multiple network nodes 110, 112. The UEs 120, 122 may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

In the case of multiple network nodes in the communication network, the network nodes may be connected to each other via an interface. LTE specifications call such an interface as X2 interface. An interface between an LTE node and a 5G node, or between two 5G nodes may be called Xn interface.

The network nodes 110 and 112 may be further connected via another interface to a core network 116 of the communication network. The LTE specifications specify the core network as an evolved packet core (EPC), and the core network may comprise e.g. a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC). The 5G core may comprise e.g. an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example.

In 3GPP Rel-18, a new mobility mechanism was introduced, namely LTM, which aims to reduce interruption time during handover.

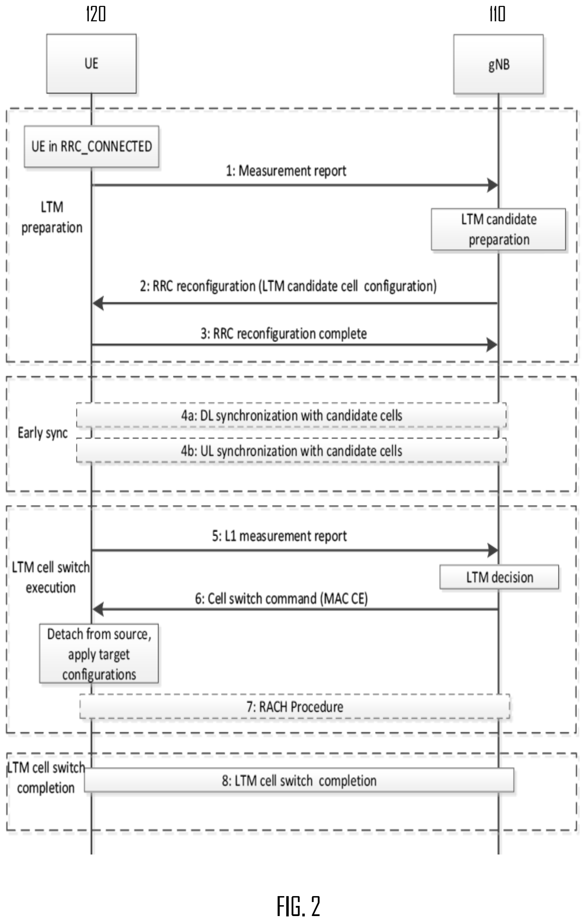

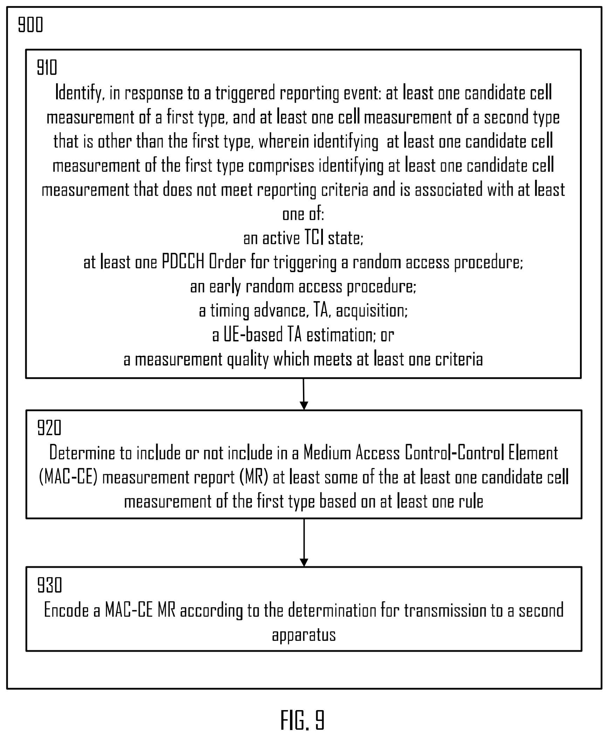

The overall procedure for LTM is illustrated in the signalling diagram in Figure 2, with reference to the network components schematically illustrated in Figure 1. Figure 2 is taken from Figure 9.2.3.5.2-1 of TS38.300v18. As described in TS38.300v18, 9.2.3.5.2, the procedure for LTM is as follows:
In Step 1 of Figure 2 the UE, for example the UE 120 sends a MeasurementReport message to the gNB 110, which provides access to the source cell 100. The gNB 110 decides to configure LTM and initiates LTM preparation.

In Step 2 of Figure 2, the gNB 110 transmits an RRCReconfiguration message to the UE 120 including the LTM candidate configurations.

In Step 3 of Figure 2 the UE 120 stores the LTM candidate configurations and transmits an RRCReconfigurationComplete message to the gNB 110.

In Step 4a of Figure 2, the UE 120 performs DL synchronization with the candidate cell(s) 102 before receiving the cell switch command.

In Step 4b of Figure 2, when the UE-based TA measurement is configured, the UE 120 acquires the TA value(s) of the candidate cell(s) 102 by measurement. The UE 120 performs early TA acquisition with the candidate cell(s) 102 as requested by the network before receiving the cell switch command as specified in clause 9.2.6. This is done via CFRA triggered by a PDCCH order from the source cell 100, following which the UE 120 sends preamble towards the indicated candidate cell 102. In order to minimize the data interruption of the source cell 100 due to CFRA towards the candidate cell(s) 102, the UE 120 does not receive a random access response from the network for the purpose of TA value acquisition and the TA value of the candidate cell 102 is instead indicated in the cell switch command. The UE 120 does not maintain the TA timer for the candidate cell 102 and relies on network implementation to guarantee the TA validity.

In Step 5 of Figure 2 the UE 120 performs L1 measurements on the configured candidate cell(s) 102 and transmits L1 measurement reports (MRs) to the source gNB 110. L1 measurements should be performed as long as the RRC reconfiguration (from step 2) is applicable.

In Step 6 of Figure 2, the gNB 110 decides to execute a cell switch from the source cell 100 to the candidate or target cell 102 and transmits a MAC CE triggering cell switch by including the candidate configuration index of the target cell 102. The UE 120 then switches to the target cell 102 and applies the configuration indicated by candidate configuration index.

In Step 7 of Figure 2 the UE 120 performs the random access (RA) procedure towards the target cell 102, if the UE 120 does not have a valid TA of the target cell 102 as specified in clause 6.1.3 of TS 38.321[6].

In Step 8 of Figure 2, the UE 120 completes the LTM cell switch procedure by sending RRCReconfigurationComplete message to the gNB 112 providing access to the target cell 102.

If the UE 120 has performed a RA procedure in Step 7 of Figure 2 then the UE 120 considers that LTM cell switch execution is successfully completed when the random access procedure is successfully completed.

For RACH-less LTM, the UE 120 considers that the LTM cell switch execution is successfully completed when the UE 120 determines that the network has successfully received its first UL data.

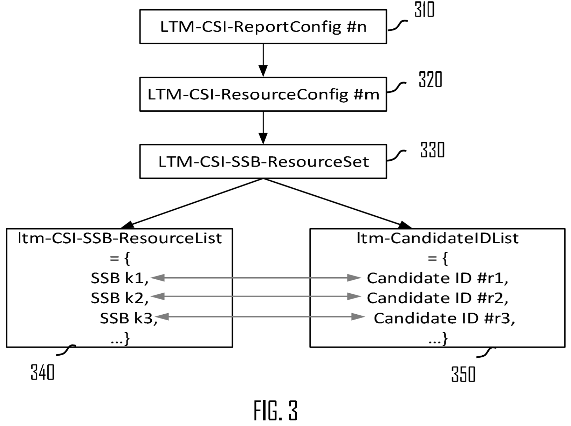

3GPP Rel-18, information about measurement resources (SSBs) from LTM candidate cells are provided to the UE 120 so that the UE can perform measurements. The UE 120 may also be configured with an L1 measurement and reporting configuration where the UE can report the measurements. For LTM, periodic and semi-persistent report on PUCCH, semi-persistent report on PUSCH, and aperiodic report on PUSCH are supported. As illustrated in Figure 3, the UE 120 may be configured with one or more LTM CSI reporting configurations (LTM-CSI-ReportConfig) 310 where the one or more LTM CSI reporting configurations may comprise an LTM CSI resource configuration (LTM-CSI-ResourceConfig) 320 containing the information of resources to be used for channel measurements (e.g., L1-RSRP measurements). For the one or more reporting configurations, the UE 120 may be configured to report M beams from each of L configured candidate cells. For example, an LTM CSI reporting configuration (LTM-CSI-ResourceConfig) 320 may comprise a configuration of an LTM-CSI-SSB-ResourceSet 330 which may comprise of a list of Z ≥ 1 SS/PBCH blocks indices (given by ltm-CSI-SSB-ResourceList) 340 and a list of Z LTM-Candidatelds (given by Itm-CandidateIDList) 350 referring to candidate cells associated with the SS/PBCH block indices.

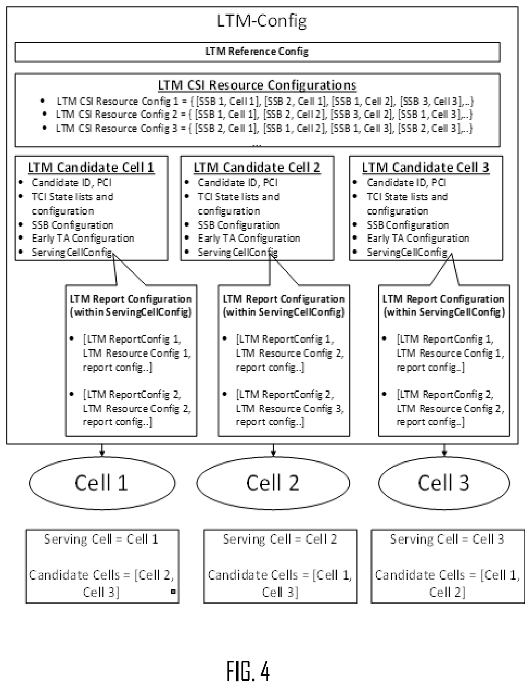

Figure 4 illustrates example components of an LTM configuration which may be one or both of a measurement and reporting configuration. For each candidate cell, the UE 120 may determine the time domain behavior of a SS/PBCH block resource from information referred to as ssb-Periodicity and ssb-PositionsInBurst and the frequency domain behavior of a SS/PBCH block resource may be determined by higher layer parameters referred to as subCarrierSpacing, ssbFrequency. For each cell, the one or more LTM CSI reporting configurations may be given under the current serving cell's configuration, wherein each report configuration contains an indication of an LTM CSI resource configuration and other parameters related for reporting, e.g., timing and uplink resources to transmit reports. An LTM CSI resource configuration may contain a set of SSB indices from multiple candidate cells. This information may be placed in a common LTM configuration. A detailed configuration of each SSB of a candidate cell may be indicated in an LTM CSI resource configuration in a LTM-SSB-Config under an LTM candidate information element. For one or more candidate cells, the LTM-Candidate information element contains the configuration/information needed by the UE 120 before cell switch, e.g., SSB information for LTM measurements. The LTM-Candidate information element may also comprise a list of NZP-CSI-RS resources which are currently used to provide the information for activation of TCI states associated with a tracking RS (a type of CSI-RS). The same may be used for LTM measurements with CSI-RSs. An LTM-Candidate information element may also comprise an RRC container (ServingCellConfig) which may comprise configuration details that may be needed by the UE 120 after the UE switches to the candidate cell from the current serving cell after the cell switch command. In other words, ServingCellConfig given under the LTM-Candidate information element comprises the configuration details needed to perform regular serving cell operation within the candidate cell.

The LTM-CSI-ReportConfig may be used to configure event-triggered reports on the cell for which the LTM-CSI-ReportConfig is included. For example, an LTM-CSI-ReportConfiglD information element may be used to identify an LTM-CSI-ReportConfig and an LTM-CSI-ResouceConfig may define a group of one or more CSI resources for one or more LTM candidate configurations.

3GPP Rel-19 aims to provide enhancements over 3GPP Rel-18 and enables CSI-RS measurements for certain procedures, including, but not limited, to LTM mobility procedures.

One enhancement may be to use MAC-CE as a reporting container for cell measurements in a MR.

In some examples, the UE initiated beam management (UE event triggered beam management) may be to use MAC-CE as a reporting container for beam management measurements in a MR.

The term MAC-CE MR will be used hereinafter to describe a MAC-CE that includes at least one event-triggered cell measurement which may include measurement(s) on RSs such as SSBs and/or CSI-RSs.

The size of a MAC-CE MR can be flexible and the amount of information that may be included in the MAC-CE MR may depend on at least one of the measurement configuration, the available uplink grant of resources for reporting the MAC-CE MR, whether the MAC-CE MR has a truncated or non-truncated format, or whether including the information will exceed a first threshold number of (total) cell measurements that the MAC-CE MR will support. The first threshold may, for example, by configured by the network.

Some measurement configurations (which may comprise, or be associated with a reporting configuration) for event-triggered reporting may configure the UE 120 to include in a MAC-CE MR at least one cell measurement of a first type that does not meet reporting criteria, for example in addition to (or instead of) at least one cell measurement of a second type that is other than the first type. For example, the at least one cell measurement of the second type may include at least one of: at least one candidate cell measurement that meets the reporting criteria; or at least one serving cell measurement. In this context, a measurement configuration may indicate event triggering criteria which should be met by at least one candidate cell measurement in order for the MAC-CE MR to be transmitted. The event triggering criteria may, for example, be based on a predetermined reference signal receive power (RSRP) and/or signal to interference noise ratio (SINR) or other quality metric that is required to be met (for example below or above a threshold and/or having an average value below or above a threshold) and possibly over a predetermined period (for example a time-to-tigger period). One or more other criteria may additionally or alternatively be configured. When the reporting event is triggered, the at least one candidate cell measurement that meets the reporting criteria may be included in the MAC-CE MR and/or at least one serving cell measurement. In some situations, however, it may be advantageous to include at least one candidate cell measurement of the first type, which did or does not meet the reporting criteria. This may provide more information to the network on potential other RSs and/or the cell level quality.

In some example embodiments, a configuration may indicate that at least one candidate cell measurement of the first type may be be included in the MAC-CE MR. The configuration may comprise a measurement configuration which may itself comprise, or is associated with, a reporting configuration. The configuration or a predefined rule may also indicate an order in which the at least one candidate cell measurement of the first type is to be included in relation to at least one candidate cell measurement of the second type, for example before or after. The configuration may also indicate a first threshold number, N, of cell measurements (regardless of type) that may be included in the MAC-CE MR. The configuration may also indicate a second threshold number, M, of candidate cell measurements of the first type that may be included in the MAC-CE MR. The above indications may individually or collectively be regarded as rules by which the UE 120 determines which cell measurements to include in the MAC-CE MR.

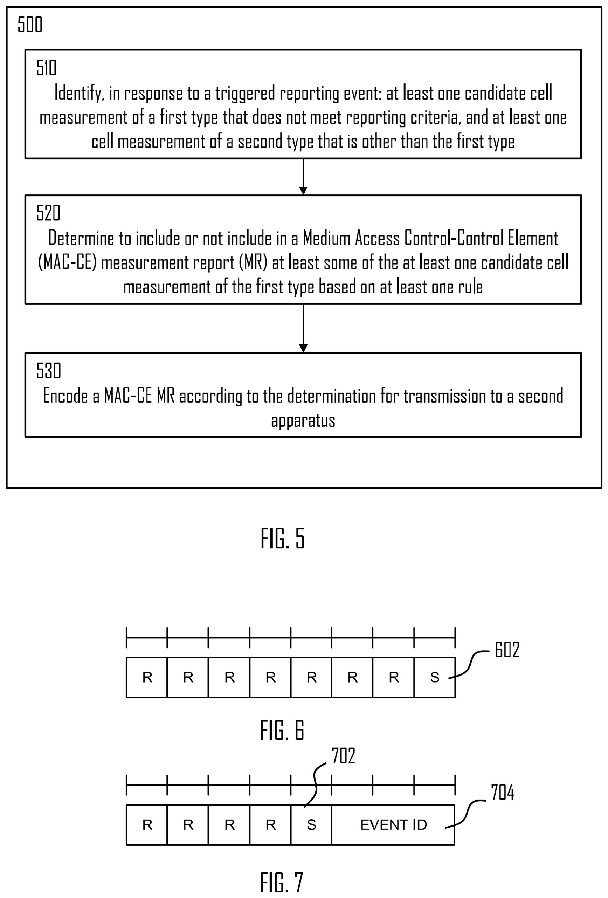

Figure 5 is a flow diagram showing operations 500 that may be performed by one or more example embodiments. The operations 500 may be performed by hardware, software, firmware or a combination thereof. The operations 500 may be performed by one, or respective, means, a means being any suitable means such as one or more processors or controllers in combination with computer-readable instructions provided on one or more memories.

The operations 500 may, for example, be performed by a first apparatus, for example the UE 120 of Figure 1. The order of operations 500 is not necessarily indicative of their order of processing or performance.

A first operation 510 may comprise identifying, in response to a triggered reporting event: at least one candidate cell measurement of a first type that does not meet reporting criteria; and at least one cell measurement of a second type that is other than the first type.

A second operation 520 may comprise determining to include or not include, i.e., refrain from including, in a medium access control-control element, MAC-CE, measurement report, MR, at least some of the at least one candidate cell measurement of the first type based on at least one rule.

A third operation 530 may comprise encoding a MAC-CE MR according to the determination for transmission to a second apparatus.

A further operation (not shown) may comprise transmitting the encoded MAC-CE MR to the second apparatus.

In some example embodiments, the first apparatus may comprise a UE, for example the UE 120 illustrated in FIG. 1. In some example embodiments, the second apparatus may comprise a network node, for example either of the network nodes 110, 112 illustrated in FIG. 1 which may comprise a current serving network node or cell.

In some example embodiments, the MAC-CE MR may be an LTM MAC-CE MR, i.e., used as part of the Figure 2 LTM process, but other embodiments may be other than LTM.

The at least one candidate cell measurement of the first type may not meet reporting criteria of a reporting configuration (which may comprise part of a measurement configuration, or is associated with a measurement configuration) that triggered the reporting event. Particular examples of candidate cell measurements that do not meet reporting criteria will be described later on.

The at least one cell measurement of the second type may comprise at least one of: at least one candidate cell measurement that meets the reporting criteria; or at least one serving cell measurement.

The determining of the second operation 520 may comprise determining to include in the MAC-CE MR at least some of the at least one cell measurement of the second type with priority over the at least one candidate cell measurement of the first type. For example, the determining of the second operation 520 may comprise determining to first include at least some of the at least one cell measurement of the second type while not exceeding at least one of: an uplink grant for the MAC-CE MR or a first threshold, *N,* of cell measurements that the MAC-CE MR supports.

Thus, the determining of the second operation may include all or some of the at least one cell measurement of the second type. Then, the determining of the second operation 520 may further comprise determining to subsequently include in the MAC-CE MR at least some of the at least one candidate cell measurement of the first type while not exceeding at least one of: the (remaining) uplink grant for the MAC-CE MR, the first threshold, *N,* of cell measurements that the MAC-CE MR supports, or a second threshold, *M,* of candidate cell measurements of the first type. In accordance with such rule(s), it is therefore possible that some or all of the at least one cell measurement of the second type will be included in the MAC-CE MR. In some examples, none, some (e.g. up to *M*) or all of the at least one candidate cell measurement of the first type will be included in the MAC-CE MR.

The determining of the second operation 520 may alternatively comprise determining to include in the MAC-CE MR at least some of the at least one candidate cell measurement of the first type with priority over the at least one cell measurement of the second type. For example, the determining of the second operation 520 may comprise determining to include in the MAC-CE MR at least some of the at least one cell measurement of the first type while not exceeding at least one of: the uplink grant for the MAC-CE MR, the first threshold, *N,* of cell measurements that the MAC-CE MR supports, or the second threshold, *M,* of candidate cell measurements of the first type. Then, the determining of the second operation 520 may further comprise determining to subsequently include in the MAC-CE MR at least some of the at least one cell measurement of the second type while not exceeding at least one of: the (remaining) uplink grant for the MAC-CE MR, the first threshold, *N,* of cell measurements that the MAC-CE MR supports. In accordance with such rule(s), it is therefore possible that some or all of the at least one candidate cell measurement of the first type will be included in the MAC-CE MR and none, some or all of the at least one cell measurement of the second type will be included in the MAC-CE MR.

In one example embodiment, the first apparatus (e.g. UE) may determine to include serving cell RS information in priority over the candidate RS information for which the reporting criteria has not been fulfilled.

In one example embodiment, the first apparatus (UE) may determine to include serving cell RS information in priority over the candidate RS information for which the reporting criteria has not been fulfilled, if both cannot be included (e.g., due to exceeding available grant or the maximum number of reported candidate RSs).

In one example the first apparatus (UE) may determine to include serving cell RS information, if configured to include, and the candidate RS information in the MAC CE. When all the candidate RS information for which the reporting criteria (and serving cell RS information) has been fulfilled the first apparatus may include candidate RS information for which the reporting criteria is not fulfilled, while not exceeding the available UL grant available grant or the maximum number of reported candidate RS.

In one example embodiment, the first apparatus (UE) may determine to include the candidate RS information for which the reporting criteria has not been fulfilled in priority over the serving cell RS information.

In one example embodiment, the first apparatus (UE) may determine to include the candidate RS information for which the reporting criteria has not been fulfilled in priority over serving cell RS information, if both cannot be included (e.g., due to exceeding available grant or the maximum number of reported candidate RS).

In one example embodiment, the first apparatus (UE) may determine to include serving cell RS information, if configured to include. After the inclusion of the candidate RS information for which the reporting criteria has been fulfilled and the inclusion of candidate RS information (e.g., up to a configured number of such RSs) for which the reporting criteria is not fulfilled, the UE may include the information of serving RS while not exceeding the available UL grant available grant or the maximum number of reported candidate RSs.

The first and/or the second threshold(s) *N, M* may be configured by the network, for example by the second apparatus, or another apparatus; for example, the first and/or second threshold(s) *N, M* may be indicated in the reporting configuration associated with the triggered event or in a different configuration. Alternatively, the first and/or second threshold(s) *N, M* may be preconfigured at the first apparatus.

The second threshold, *M,* may indicate at least one of number of candidate cell measurements of the first type on at least one of a per candidate cell, per plurality of candidate cells, per MAC-CE MR, or per measurement and/or reporting configuration associated with the triggered reporting event, reported reference signal type, basis. The second threshold, *M,* may be applied for truncated format of MAC-CE or non-truncated (normal) format of MAC-CE.

In some examples, the events may comprise or be associated with one or more of the following agreements. For example, events may be associated with event-triggered L1 measurements for the following LTM purposes: selecting the candidate beam/cell to trigger early synchronization and/or selecting the target beam/cell and triggering LTM cell switch procedure. For event-triggered L1 measurements, use of beam level measurement results for event evaluation may be used as the baseline. The following LTM events may be based on beam-specific quality of serving cell and candidate cells as the L1 LTM measurement events: event LTM2: beam of serving cell becomes worse than absolute threshold; event LTM3: beam of candidate cell becomes amount of offset better than beam of serving cell; event LTM4: beam of candidate cell becomes better than absolute threshold; event LTM5: beam of serving cell becomes worse than absolute threshold1 and beam of candidate cell becomes better than another absolute threshold2. The beam configuration of both SSB and CSI-RS may be supported in L1 measurement resource configuration in LTM config. A working assumption may be that the same RS type should be used for both serving and neighbouring cells for event LTM3 and event LTM5. RAN2 assumes filtering of the L1 measurement results is needed. For LTM event evaluation, TTT, hysteresis for entering/leaving, and/or beam specific offset can be applied.

In some example embodiments, another operation may comprise transmitting, to the second apparatus, at least a first indication of a capability of the first apparatus to include at least some of the at least one candidate cell measurement of the first type in the MAC-CE MR, for example in addition to at least one cell measurement of the second type. The first indication may be transmitted before, or with, the MAC-CE MR. In some example embodiments, the first indication may further indicate at least one of a minimum or maximum number of candidate cell measurement(s) of the first type that the first apparatus is capable of including in the MAC-CE MR.

In some example embodiments, another operation may comprise transmitting, to the second apparatus, at least a second indication for indicating whether at least some of the at least one candidate cell measurement of the first type is or are included in the MAC-CE MR.

In some example embodiments, the second indication may comprise setting a predetermined field of the MAC-CE MR to one of a first value for indicating that the at least some of the at least one candidate cell measurement of the first type is or are included, or a second value for indicating that at least some of the at least one candidate cell measurement of the first type is or are not included, e.g., none are included.

For example, the predetermined field may comprise a single bit or, alternatively, a plurality of bits.

In some example embodiments, the second indication may indicate which at least one candidate cell measurement of the first type is or are included, for example at least one of a RS index or RS measurement values, e.g., RSRP values.

Figure 6 illustrates at least part of a first example MAC-CE MR, including a predetermined field 602 (denoted "S"). The field 602 may be comprised in a first octet of the MAC-CE MR. The field 602 may be comprised in one octet of the MAC-CE MR.

Figure 7 illustrates at least part of a second example MAC-CE MR, including a predetermined field 702 (denoted "S"). The field 702 may be comprised in the first octet of the MAC-CE MR, and which may further comprise an event identifier 704 associated with the at least one reporting event. The field 702 may be comprised in one octet of the MAC-CE MR. The fields 602 and 702 may have corresponding functionality

For example, the predetermined field 602 may be set to "0" for indicating that at least one candidate cell measurement of the first type is not included (only at least one candidate cell measurement of the second type is included) and to "1" for indicating that at least some of the at least one candidate cell measurement of the first type is included, or vice versa. For example, the predetermined field 602 may be set to "0" (or "1") for indicating that no one candidate cell measurement of the first type is included.

In one example embodiment, the MAC-CE MR may comprise a field indicating the type of the reported candidate cell measurements. Each candidate cell measurement may be associated with a field indicating whether the reported measurement is of first type or second type. The field in may be in a form of a bitmap. For each of the reported candidate cell measurement(s), a corresponding bit is set to indicate the type (e.g. first/second type). The bitmap may have bit values set for the same number of reported cell measurements. For bit locations that have no corresponding measurement included, the value is not encoded or set to certain value (i.e. ignored). The field in may be in a form of a bit field (e.g. 1 bit) associated with the reported candidate cell measurement.

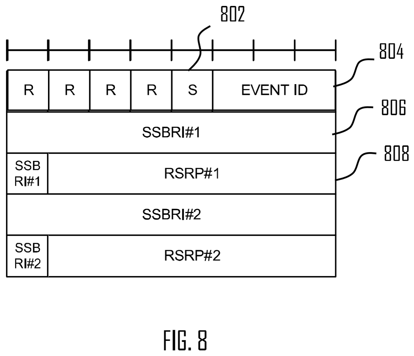

A minimum size for MAC-CE MRs may be three octets, excluding headers. Figure 8 illustrates at least part of a third example MAC-CE MR comprising at least three octets. The first octet may include the (optional) predetermined field 802 (denoted "S") which indicates whether or not at least one candidate cell measurement of the first type is included, and which may further comprise an event identifier 804 associated with the at least one reporting event. The second (and/or part of the third octet) octet may comprise an RS index or identifier 806 for the at least one candidate cell measurement of the first type. The third octet may comprise an RS measurement value 808, e.g., RSRP, associated with the RS index or identifier 806. The third octet may comprise a field comprising part of the RS index field.

In some example embodiments, the RS index or identifier may comprise at least one of: an SSB identifier, a CSI-RS identifier, an SSB resource indicator (SSBRI) or a CSI-RS resource indicator (CRI).

Example embodiments therefore cover various inclusion scenarios, noting that the at least one cell measurement of the second type may comprise at least candidate cell measurement that meets the reporting criteria and at least one serving cell measurement. For example, the MAC-CE MR may include at least one candidate cell measurement that meets the reporting criteria and at least some of the at least one candidate cell measurement of the first type that does not. For example, the MAC-CE MR may comprise at least one serving cell measurement and at least some of the at least one candidate cell measurement of the first type. For example, the MAC-CE MR may comprise at least one serving cell measurement, at least some of the at least one candidate cell measurement that meets the reporting criteria and at least some of the at least one candidate cell measurement of the first type that does not. The above-described rules may be used to determine the order or priority in which the different measurement types are included and whether or not any, some or all of the at least one measurement of the first type is included.

In some example embodiments, the measurements of the first type may be included in the MAC-CE MR in the order of the reported measurement values (e.g. RSRP). The measurements of the first type may be included in the MAC-CE MR in the order (e.g. descending order) of the reported measurement values (RSRP values).

In some example embodiments, the measurements of the second type may be included in the MAC-CE MR in the order of reported measurement values ( e.g. RSRP). The measurements of the second type may be included in the MAC-CE MR in the order (e.g. descending order) of the reported measurement values (RSRP values). The measurements listed in order of reported measurement values may comprise of candidate cell measurements.

In some example embodiments, the MAC-CE MR may include at least one measurement of a first type in uplink grant (only) if there are no other MAC-CE (e.g. MAC-CE , or MAC-CE with equal priority or MAC-CE with lower priority)) included in the same grant. In some examples, if there are other MAC-CEs (ie. Other control information) included in same grant, the UE only includes the measurement(s) of second type (e.g. only candidate cell measurements and/or serving cell measurement) MAC-CE MR.

In some example embodiments, the MAC-CE MR including at least one measurement of a first type in uplink grant (only) if there are no other MAC-CEs (e.g. other control information) or data included in the same grant. In some examples, if there are other MAC-CEs (e.g. MAC-CE , or MAC-CE with equal priority or MAC-CE with lower priority) or data included in same grant, the UE only includes the measurement(s) of the second type (e.g. only candidate cell measurements and/or serving cell measurement) in the MAC-CE MR.

In some example embodiments, the MAC-CE MR may include at least one measurement of a first type in the uplink grant (only) if there are no data included in the same grant. In some examples, if there is data included in same grant, the UE only includes the measurement(s) of the second type (e.g. only candidate cell measurements and/or serving cell measurement) in the MAC-CE MR.

In some example embodiments, the MAC-CE MR may include only second type of measurements if in the same uplink grant includes at least one of: data or at least one another MAC-CE or at least another MAC-CE with lower priority or at least one another MAC-CE with equal priority as the MAC-CE MR. The benefit is not to include additional information when there may be other information that may need to be sent to the network.

In some example embodiments, the first operation 510 of identifying the at least one candidate cell measurement of the first type may comprise identifying at least one candidate cell measurement for which at least one of the following conditions apply.

A first condition may comprise a TTT period associated with the at least one candidate cell measurement having started but not yet expired. A second condition may comprise an RSRP value associated with the at least one candidate cell measurement being within a first range (e.g., in terms of x dBs) of an RSRP value of a serving cell measurement. A third condition may comprise the RSRP value associated with the at least one candidate cell measurement being within a second range (e.g., in terms of y dBs) of the highest RSRP vale associated with another candidate cell measurement. The x and y dB values may be the same or different. A fourth condition may comprise the RSRP value associated with the at least one candidate cell measurement not meeting or fulfilling the reporting criteria.

In some example embodiments, and in accordance with one or more implementation examples, the first operation 510 of identifying the at least one candidate cell measurement of the first type may comprise (additional, or alternative to the above conditions) identifying at least one candidate cell measurement for which at least one of the following conditions apply.

A fifth condition may comprise that the at least one candidate cell measurement is associated with an active TCI state. In this context, the network via the current serving cell (second apparatus) may signal to the UE 120 (first apparatus), or configure it with, a list of active TCI states or TCI states to be activated by the UE. The UE 120 may therefore identify the at least one candidate cell measurement as being associated with an RS in the active TCI state if the RS corresponds to the active TCI state or is quasi co-located (QCL'd) with another RS corresponding to the active TCI state.

A sixth condition may comprise that the at least one candidate cell measurement is associated with at least one PDCCH order (received, for example, in Step 4b of Figure 2) for triggering a random access procedure. For example, an RS associated with the at least one candidate cell measurement may be indicated in the received at least one PDCCH order for triggering early RACH.

A seventh condition may comprise that the at least one candidate cell measurement is associated with an early random access procedure. For example, an RS associated with the at least one candidate cell measurement may have been transmitted or indicated as part of the early random access procedure (PRACH).

An eighth condition may comprise that the at least one candidate cell measurement is associated with a timing advance (TA) acquisition or UE-based TA estimation. For example, an RS associated with the at least one candidate cell measurement may be used as part of the TA acquisition or UE-based TA estimation.

A ninth condition may comprise that a measurement quality (e.g., RSRP or based on RSRP or similar) meets at least one criteria.

For example, an average measurement quality value for an RS associated with the at least one candidate cell measurement may be determined over a TTT period. The at least one criteria may be met if the average measurement quality value is the highest, or one of a predetermined number of most-highest, measurement quality values. If the latter, multiple such candidate cell measurements may meet the at least one criteria.

For example, a measurement quality value (e.g., RSRP or based on RSRP or similar) for an RS associated with the at least one candidate cell measurement may be determined at multiple instances over the TTT period. The at least one criteria may be met if the most-recent measurement quality value for the RS is the highest, or one of a predetermined number of most-highest, measurement quality values. If the latter, multiple such candidate cell measurements may meet the at least one criteria.

For example, an instance is referred when layer 1 sends a measurement to layer 2 for event evaluation, and the measurement quality is referred to, for example L1-RSRP sent by the layer 1 or a filtered measurement (e.g., L1-RSRP) after applying additional filtering (e.g., using an infinite impulse response (IIR) filter) at layer 2. Accordingly, at least one candidate cell measurement associated with a measurement quality which meets at least one criteria is a layer 1 measurement provided to the higher layer or the L1 measurement additionally filtered by layer 1 or layer 2.

Figure 9 is a flow diagram showing operations 900 that may be performed by one or more example embodiments. The operations 900 may be performed by hardware, software, firmware or a combination thereof. The operations 900 may be performed by one, or respective, means, a means being any suitable means such as one or more processors or controllers in combination with computer-readable instructions provided on one or more memories.

The operations 900 may, for example, be performed by a first apparatus, for example the UE 120 of Figure 1. The order of operations 900 is not necessarily indicative of their order of processing or performance.

A first operation 910 may comprise identifying, in response to a triggered reporting event: at least one candidate cell measurement of a first type; and at least one cell measurement of a second type that is other than the first type. The identifying the at least one candidate cell measurement of the first type may comprise identifying at least one candidate cell measurement that does not meet reporting criteria and associated with at least one of: an active TCI state; at least one PDCCH order for triggering a random access procedure; an early random access procedure; a TA acquisition; a UE-based TA estimation; or a measurement quality which meets at least one criteria.

A second operation 920 may comprise determining to include or not include, i.e., refrain from including, in a medium access control-control element, MAC-CE, measurement report, MR, at least some of the at least one candidate cell measurement of the first type based on at least one rule.

A third operation 930 may comprise encoding a MAC-CE MR according to the determination for transmission to a second apparatus.

A further operation (not shown) may comprise transmitting the encoded MAC-CE MR to the second apparatus.

Other features associated with the Figure 5 example may be incorporated with the Figure 9 example.

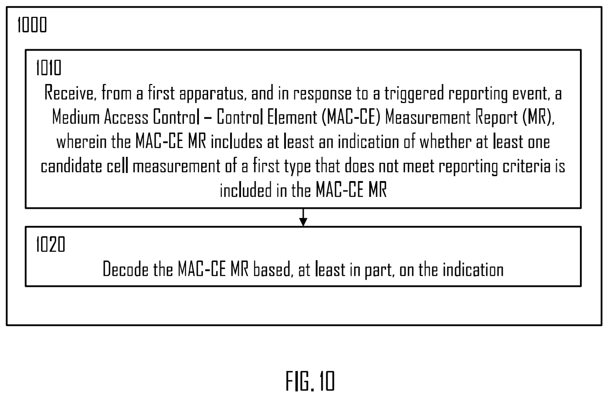

Figure 10 is a flow diagram showing operations 1000 that may be performed by one or more example embodiments. The operations 1000 may be performed by hardware, software, firmware or a combination thereof. The operations 1000 may be performed by one, or respective, means, a means being any suitable means such as one or more processors or controllers in combination with computer-readable instructions provided on one or more memories.

The operations 1000 may, for example, be performed by a second apparatus, for example the network node 110 or 112 of Figure 1. The order of operations 1000 is not necessarily indicative of their order of processing or performance.

A first operation 1010 may comprise receiving, from a first apparatus, and in response to a triggered reporting event, a Medium Access Control - Control Element, MAC-CE, measurement report, MR, wherein the MAC-CE MR includes at least an indication of whether at least one candidate cell measurement of a first type that does not meet reporting criteria is included in the MAC-CE MR.

A second operation 1020 may comprise decoding the MAC-CE MR based, at least in part, on the indication.

In some example embodiments, another operation may comprise providing, to the first apparatus, a configuration associated with the triggered reporting event, wherein the configuration indicates whether to include or not include the at least one candidate cell measurement of the first type in the MAC-CE MR. The configuration, or another configuration, may indicate the at least one condition (examples of which are described above) that may be used by the first apparatus to identify the at least one candidate cell measurement of the first type. The configuration, or another configuration, may indicate at least one rule (examples of which are described above) that may be used by the first apparatus to determine whether to include or not include the at least one candidate cell measurement of the first type in the MAC-CE MR.

In some example embodiments, the indication is comprised in a predetermined field of the received MAC-CE MR and is set to a first value for indicating that the at least one candidate cell measurement of the first type is included or a second value for indicating that the at least one candidate cell measurement of the first type is not included. The predetermined field may comprise a single bit and may be comprised in a first octet of the MAC-CE MR. The first octet may further comprise an event identifier associated with the at least one reporting event.

In some example embodiments, upon identifying that at least one candidate cell measurement of the first type is included in the received MAC-CE MR, the second apparatus may further decode the at least one candidate cell measurement of the first type from at least one of a second octet of the MAC-CE MR, a third octet of the MAC-CE MR or second and third octets of the MAC-CE MR. Other cell information may also be decoded.

The second apparatus may therefore, upon receiving the MAC-CE MR, inspect the expected location of the indicator (for example the S-bit of the first octet) and operate accordingly. For example, if the received indication indicates that no candidate cell measurement of the first type is included (e.g., S=0) and it is not required at the second apparatus, then no further action is needed; otherwise, the second apparatus may obtain the at least one candidate cell measurement of the first type by other means, for example at a later time. For example, if at least one candidate cell measurement of the first type is included (e.g., S=1) the second apparatus may, by decoding the MAC-CE MR, obtain the at least one candidate cell measurement of the first type based on information as to which at least one candidate cell measurement of the first type is included and in which octet or octets.

For example, the second apparatus may receive the above-described first indication of the capability of the first apparatus to include at least one of the RS index and/or the RS measurement for the at least one RS in the MAC-CE MR. The second apparatus may therefore inspect the expected location of the indicator (for example the S-bit of the first octet). If at least one candidate cell measurement of the first type is included (e.g., S=1) and the above-described second indication of which of the RS index and/or RS measurement value for the at least one RS is received, the second apparatus is aware that said information is included in at least the second octet, third octet or second and third octets.

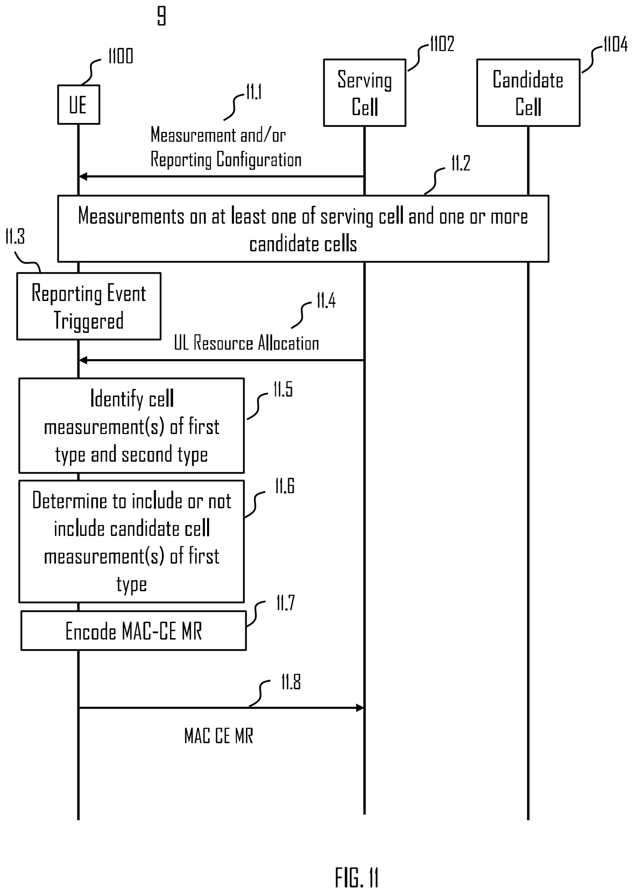

Figure 11 is a signal flow diagram according to an example embodiment, illustrating interactions between a UE 1100, a serving cell 1102 and at least one candidate cell 1104.

In a first operation 11.1, the serving cell 1102 may transmit to the UE 1100 a measurement and reporting configuration (whether in a single configuration or as separate measurement and reporting configurations). For example, the measurement and reporting configuration may be an LTM measurement and reporting configuration. The reporting configuration may indicate at least one reporting event and at least one trigger condition associated with the at least one reporting event.

The reporting configuration may also indicate that measurements associated with the at least one reporting event is or are to be included in a MAC-CE MR.

In a second operation 11.2, the UE 1200 may perform measurements on at least one of the serving cell 1102 and the at least one candidate cell 1104.

In a third operation 11.3, the UE 1100 may determine that at least one configured reporting event is triggered based on the at least one trigger condition being met.

In a fourth operation 11.4, the serving cell 1102 may transmit to the UE 1100 an allocation of uplink resources for transmitting the MAC-CE MR at a subsequent time. The allocation of uplink resources may take any suitable form, for example any dynamic or configured allocation, such as an uplink grant. The allocation may additionally or alternatively indicate whether the MAC-CE MR is in a truncated or non-truncated format. The UE 1100 receives the allocation of uplink resources.

In a fifth operation 11.5, the UE 1100 may identify at least one candidate cell measurement of a first type and at least one cell measurement of a second type, definitions of which are described above.

In a sixth operation 11.6, the UE 1100 may determine to include or not include at least some of the at least one candidate cell measurement of the first type in the MAC-CE MR. For example, the configuration associated with the triggered reporting event may indicate whether to include or not include at least one candidate cell measurement of the first type in the MAC-CE MR and at least one other rule may also be applied, examples of which are described above.

In a seventh operation 11.7, the UE 1100 may encode the MAC-CE MR based on the determination of the sixth operation 11.6.

In an operation 11.8, the UE 1100 may transmit to the serving cell 1102 the encoded MAC-CE MR to the serving cell 1102.

The serving cell 1102 may thereafter decode the MAC-CE MR.

Example embodiments provide support for a single MAC CE MR format for different reporting events, whether LTM reporting events or similar, where inclusion of at least one candidate cell measurement not meeting the reporting criteria may be desired or appropriate. The UE is enabled to opportunistically include candidate cell measurements not meeting reporting criteria if sufficient uplink resources permit. The UE is also enabled to omit candidate cell measurements, even if configured to include, if for example the MAC CE MR has a truncated format.

### Example Apparatus

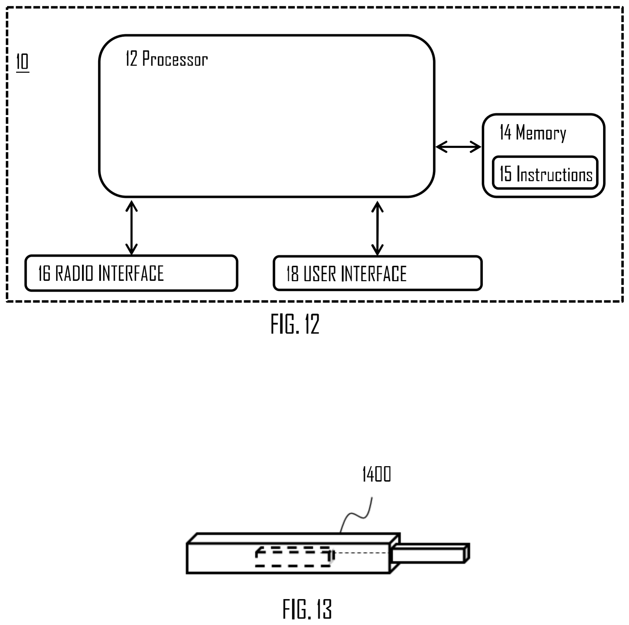

Figure 12 shows, by way of example, a block diagram of an apparatus 10. The apparatus 10 comprises, for example, at least one processor 12 and at least one memory 14 storing instructions 15 that, when executed by the at least one processor, cause the apparatus 10 at least to perform the method or methods as disclosed herein, and any of the embodiments thereof. In an example, the at least one memory and the instructions (e.g. a computer program code, software), are configured, with the at least one processor, to cause the apparatus 10 to perform the method or methods as disclosed herein, and any of the embodiments thereof.

A processor 12 may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 14 may be implemented using any suitable data storage technology. The memory may comprise a database for storing data. The memory 14 may be at least in part external to apparatus 10 but accessible to apparatus 10.

The instructions 15 may be comprised in a computer readable medium or a non-transitory computer readable medium. A term non-transitory, as used herein, is a limitation of the medium itself (i.e. tangible, not a signal) as opposed to a limitation on data storage persistency (e.g. random access memory, RAM, vs. read only memory, ROM).

For example, the apparatus 10 is a terminal device, such as the UE of Figures 1, 2 and 11. As another example, the apparatus is comprised in such a terminal device, e.g. as a chipset configured to control the terminal device. The apparatus 10 may be caused or configured to perform at least the method of Figure 5, Figure 9, Figure 10 or Figure 11 and/or any one or more of the embodiments described.

As another example, the apparatus 10 is a network node, such as the network node of Figure 1, 2 or 11. The apparatus 10 may be caused or configured to perform at least the method of Fig. 10 or Figure 11 and/or any one or more of the embodiments described.

The apparatus may comprise one or more entities of any of protocol layers, such as a MAC entity, an RRC entity, an RLC entity, a PDCP entity or a PHY entity. In some embodiments, the entity is configured to perform at least the method of Fig. 5 and/or any one or more of the embodiments described.

The apparatus 10 comprises a radio interface 16. The radio interface 16 may provide the apparatus 10 with communication capabilities. The radio interface 16 may comprise a receiver configured to receive information in accordance with at least one cellular or non-cellular standard. The radio interface 16 may comprise a transmitter configured to transmit information in accordance with at least one cellular or non-cellular standard. The receiver may comprise more than one receiver. The transmitter may comprise more than one transmitter. The radio interface 16 may comprise a transceiver configured to receive and transmit information in accordance with at least one cellular or non-cellular standard. The transceiver may comprise more than one transceiver.

The apparatus 10 may comprise a user interface 18 comprising, for example, at least one of a keypad, a microphone, a touch display, a display, a speaker, etc. The user interface 18 may be used to control the apparatus by the user. The user interface 18 may be external to the apparatus 10. For example, the apparatus 10 may be connected to another device, such as a computer, either via wireless or wired connection, and the apparatus 10 is controlled by the user via the computer.

Figure 13 shows a non-transitory media 1400 according to some embodiments. The non-transitory media 1400 is a computer readable storage medium. It may be e.g. a CD, a DVD, a USB stick, a blue ray disk, etc. The non-transitory media 1400 stores computer program code, causing an apparatus to perform the method of any preceding process for example as disclosed in relation to the flow diagrams and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

In an embodiment, at least some of the processes described herein may be carried out by an apparatus comprising means for carrying out at least some of the described processes. Means for performing method steps as disclosed herein may include software and/or hardware components of the apparatus 10. For example, the at least one processor 12, the memory 14, and the computer program code form means for carrying out the method or methods as disclosed herein, and any of the embodiments thereof. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A first apparatus, comprising:
at least one processor; and
at least one memory storing instructions that, when executed by the at least one processor, cause the first apparatus at least to:
identify, in response to a triggered reporting event:
at least one candidate cell measurement of a first type that does not meet reporting criteria; and
at least one cell measurement of a second type that is other than the first type;
determine to include or not include in a Medium Access Control-Control Element, MAC-CE, measurement report, MR, at least some of the at least one candidate cell measurement of the first type based on at least one rule; and
encode a MAC-CE MR according to the determination for transmission to a second apparatus.

2. The first apparatus of claim 1, wherein
the at least one cell measurement of the second type comprises at least one of:
at least one candidate cell measurement that meets the reporting criteria; or
at least one serving cell measurement.

3. The first apparatus of claim 1 or claim 2, wherein
the determining further comprises determining to include in the MAC-CE MR at least some of the at least one cell measurement of the second type with priority over the at least one candidate cell measurement of the first type.

4. The first apparatus of claim 3, wherein
the determining further comprises determining to include at least some of the at least one cell measurement of the second type while not exceeding at least one of:
an uplink grant for the MAC-CE MR;
a first threshold number of cell measurements that the MAC-CE MR supports.

5. The first apparatus of any preceding claim, wherein
the at least one processor and the at least one memory stores instructions that, when executed by the at least one processor, cause the first apparatus at least to:
transmit, to the second apparatus, at least a second indication for indicating whether at least some of the at least one candidate cell measurement of the first type is or are included in the LTM MAC-CE MR.

6. The first apparatus of claim 5, wherein the second indication comprises setting a predetermined field of the MAC-CE MR to one of a first value for indicating that cell measurements of the second type are only included or a second value for indicating that at least some of the at least one candidate cell measurement of the first type are included.

7. The first apparatus of claim 6, wherein
the predetermined field is comprised by a first octet of the MAC-CE MR.

8. The first apparatus of claim 6 or claim 7, wherein
one octet of the MAC-CE MR further comprises an event identifier associated with the at least one reporting event.

9. The first apparatus of any preceding claim, wherein
the identifying the at least one candidate cell measurement of the first type comprises identifying at least one candidate cell measurement for which at least one of the following conditions apply:
a time-to-trigger, TTT, period associated with the at least one candidate cell measurement is started but not yet expired;
a reference signal receive power, RSRP, value associated with the at least one candidate cell measurement is within a first range of an RSRP value of a serving cell measurement; or
the RSRP value associated with the at least one candidate cell measurement is within a second range of the highest RSRP value associated with another candidate cell measurement; or
the RSRP value associated with the at least one candidate cell measurement not fulfilling the reporting criteria.

10. The first apparatus of any preceding claim, wherein
the at least some of the at least one candidate cell measurement comprises at least one of:
an RS measurement value and RS index for at least one RS associated with the candidate cell.; or
an RS measurement value for at least one RS associated with the candidate cell.

11. The first apparatus of claim 10, wherein
the determining comprises determining to include a plurality of RS measurement values of the at least one candidate cell measurement of the first type and in ascending order of RS measurement value.

12. The first apparatus of any preceding claim, wherein
the MAC-CE MR is a lower-layer triggered mobility, LTM, MAC-CE MR.

13. A second apparatus, comprising:
at least one processor; and
at least one memory storing instructions that, when executed by the at least one processor, cause the second apparatus at least to:
receive, from a first apparatus, an in response to a triggered reporting event, a Medium Access Control - Control Element, MAC-CE, measurement report, MR, wherein the MAC-CE MR includes at least an indication of whether at least one candidate cell measurement of a first type that does not meet reporting criteria is included in the MAC-CE MR; and
decode the MAC-CE MR based, at least in part, on the indication.

14. A method of a first apparatus, comprising:
identifying, in response to a triggered reporting event:
at least one candidate cell measurement of a first type that does not meet reporting criteria; and
at least one cell measurement of a second type that is other than the first type;
determining to include or not include in a Medium Access Control-Control Element, MAC-CE, measurement report, MR, at least some of the at least one candidate cell measurement of the first type based on at least one rule; and
encoding a MAC-CE MR according to the determination for transmission to a second apparatus.

15. A method of a second apparatus, comprising:
receiving, from a first apparatus, an in response to a triggered reporting event, a Medium Access Control-Control Element, MAC-CE, measurement report, MR, wherein the MAC-CE MR includes at least an indication of whether at least one candidate cell measurement of a first type that does not meet reporting criteria is included in the MAC-CE MR; and
decoding the MAC-CE MR based, at least in part, on the indication.
